# EUROPEAN PATENT SPECIFICATION

(11) **EP 4 604 042 B1**
(45) Date of publication and mention of the grant of the patent: **02.09.2026**
(21) Application number: 24223342.7
(22) Date of filing: 27.12.2024
(51) Int. Cl.: G06Q 30/0601, H01M 4/04, H01M 10/0525, G06N 20/00

(54) **SYSTEMS AND METHODS FOR MANUFACTURING A BATTERY ELECTRODE PLATE**
SYSTEME UND VERFAHREN ZUR HERSTELLUNG EINER BATTERIEELEKTRODENPLATTE
SYSTÈMES ET PROCÉDÉS DE FABRICATION D'UNE PLAQUE D'ÉLECTRODE DE BATTERIE

(30) Priority: 14.02.2024 KR 20240021249
(43) Date of publication of application: 20.08.2025
(73) Proprietor: SAMSUNG SDI CO., LTD., Yongin-si, Gyeonggi-do 17084 (KR)
(72) Inventor: Kim, Hye Lynn, 17084 Yongin-si, Gyeonggi-do (KR); Jang, Jaesoon, 17084 Yongin-si, Gyeonggi-do (KR); Park, Jun-Ho, 17084 Yongin-si, Gyeonggi-do (KR); Kim, Yongjin, 17084 Yongin-si, Gyeonggi-do (KR)
(74) Representative: Gulde & Partner

(56) References cited:
- HAGHI SAJEDEH ET AL: "Efficient Analysis of Interdependencies in Electrode Manufacturing Through Joint Application of Design of Experiments and Explainable Machine Learning", vol. 7, no. 2, 7 December 2023 (2023-12-07), XP093269323, ISSN: 2566-6223, Retrieved from the Internet <URL:https://doi.org/10.1002/batt.202300457> DOI: 10.1002/batt.202300457
- KABRA VENKATESH ET AL: "Mesoscale Machine Learning Analytics for Electrode Property Estimation", vol. 126, no. 34, 22 August 2022 (2022-08-22), US, pages 14413 - 14429, XP093269388, ISSN: 1932-7447, Retrieved from the Internet <URL:https://pubs.acs.org/doi/pdf/10.1021/acs.jpcc.2c04432> DOI: 10.1021/acs.jpcc.2c04432
- ANDERSSON MALIN ET AL: "Parametrization of physics-based battery models from input-output data: A review of methodology and current research", JOURNAL OF POWER SOURCES, ELSEVIER, AMSTERDAM, NL, vol. 521, 13 January 2022 (2022-01-13), XP086937012, ISSN: 0378-7753, [retrieved on 20220113], DOI: 10.1016/J.JPOWSOUR.2021.230859

## Description

### BACKGROUND OF THE INVENTION

### 1. Field

The present disclosure relates to systems and methods for manufacturing a battery electrode plate.

### 2. Description of the Related Art

In general, unlike a primary battery that is not designed to be recharged, a secondary battery is designed to be discharged and recharged. Low-capacity secondary batteries are used in portable, small-sized electronic devices such as smartphones, feature phones, notebook computers, digital cameras, camcorders, and the like. A high-capacity secondary battery is used, as an example, as a power source and/or a power storage device for driving a motor in a hybrid vehicle and an electric vehicle. In general terms, the secondary battery includes an electrode assembly having a positive electrode and a negative electrode, a case accommodating the electrode assembly, and an electrode terminal connected to the electrode assembly.

The positive electrode of the secondary battery is manufactured by applying a positive electrode active material onto a positive electrode current collector in the form of a metal thin film or metal mesh. The negative electrode of the secondary battery is manufactured by applying a negative electrode active material onto a negative electrode current collector in the form of a metal thin film or metal mesh. The secondary battery is charged and discharged by repeated insertion and detachment of ions in the positive electrode active material layer of the positive electrode plate and the negative electrode active material layer of the negative electrode plate.

The ionic resistance characteristics of the electrode plate of the secondary battery can vary depending on the components that configure the electrode plate and the structural characteristics of the electrode plate. The tortuosity of the electrode plate can vary depending on the shape, distribution, and content of each particle of the particles configuring the active material layer. The tortuosity of the electrode plate can affect the movement path and movement length of ions, and act as a factor in determining the ionic resistance characteristics of the electrode plate.

Haghi et al. (Haghi, Sajedeh, et al. "Efficient Analysis of Interdependencies in Electrode Manufacturing Through Joint Application of Design of Experiments and Explainable Machine Learning." Batteries & Supercaps 7.2 (2024)) relates to an efficient analysis of interdependencies in electrode manufacturing through joint application of design of experiments and explainable machine learning.

The above information disclosed in this Background section is for enhancement of understanding of the background of the described technology and therefore it may contain information that does not form the prior art that is already known to a person of ordinary skill in the art.

### SUMMARY

Embodiments of the present disclosure provide systems and methods for manufacturing a battery electrode plate based on predicting in advance the electrode plate characteristics according to design values of process factors during an electrode plate design process of a secondary battery.

Technical solutions obtainable from the present disclosure are not limited to the above-mentioned technical solutions. Other technical solutions not expressly mentioned herein can be clearly understood from the following description by those having ordinary skill in the technical field to which the present disclosure pertains.

A system comprises a computing (or design support) device configured to receive, from a client device (e.g., a user terminal), a target process factor among a plurality of process factors associated with manufacturing a battery electrode plate, predict, via a machine-learning model, a change in a characteristic of the battery electrode plate based on a change in a design value of the target process factor, generate information for selecting the target process factor based on predicting the change of the characteristic of the battery electrode plate, and transmit the information to the client device for manufacturing the battery electrode plate, wherein based on determining that the plurality of process factors include fractions of a plurality of active materials and the target process factor is a fraction of at least one active material of the plurality of active materials, the computing device is further configured to automatically adjust the fractions of the plurality of active materials to make a sum of the fractions of the plurality of active materials to equal 100 in response to the design value of the target process factor being changed.

The machine-learning model may be configured to output a characteristic information of the battery electrode plate based on input design values corresponding to the plurality of process factors.

The computing device may be further configured to obtain tortuosity of the battery electrode plate based on the machine-learning model and may be further configured to calculate ionic resistance based on the tortuosity.

The computing device may be further configured to automatically set the input design values corresponding to the plurality of process factors other than the target process factor as design values used in a previous prediction of the machine-learning model.

The computing device may be further configured to receive the input design values corresponding to the plurality of process factors other than the target process factor from the client device.

The computing device may be further configured to receive design range information including a design value change range and change interval of the target process factor from the client device, and may be further configured to increase or decrease the design value of the target process factor based on the design range information.

Based on determining that the plurality of process factors include fractions of a plurality of active materials and the target process factor is a fraction of at least one active material of the plurality of active materials, the computing device is further configured to automatically adjust the fractions of the plurality of active materials to make a sum of the fractions of the plurality of active materials to equal 100 in response to the design value of the target process factor being changed.

The computing device may be further configured to select a characteristic value of the battery electrode plate that satisfies a condition based on predicting the change in the characteristic of the battery electrode plate, and may be further configured to generate the information to include the selected characteristic value and the design value of the target process factor used to derive the characteristic value.

The computing device may be further configured to receive a target characteristic value from the client device, may be further configured to select at least one second characteristic value based on predicting the change in the characteristic of the battery electrode plate based on the second characteristic value having a difference with the target characteristic value that satisfies a criterion, and may be further configured to generate the information to include the selected at least one second characteristic value and the design value of the target process factor used to derive at least one second characteristic value.

The characteristic information may include an ionic resistance of the battery electrode plate. The computing device may be further configured to select at least one ionic resistance among a plurality of ionic resistances obtained based on predicting the change in the characteristic of the battery electrode plate, wherein the at least one ionic resistance has a smallest difference from a target ionic resistance received from the client device, and may be further configured to generate the information to include the selected at least one ionic resistance and the design value of the target process factor used to derive the selected at least one ionic resistance.

A system according to one embodiment which does not form part of the appended claims comprises a computing device configured to receive, from a client device, (process design) information for manufacturing a battery electrode plate, predict characteristic information of the battery electrode plate using the information and a machine learning-based prediction model, and transmit the characteristic information to the client device for manufacturing the battery electrode plate.

The characteristic information may include a tortuosity and an ionic resistance of the battery electrode plate. The computing device may be further configured to input the information into the prediction model to obtain the tortuosity of the battery electrode plate, and may be further configured to calculate the ionic resistance based on the tortuosity.

The information may include design values for a plurality of process factors for manufacturing the battery electrode plate. The plurality of process factors may include a type of active material, fraction and physical properties of the active material, binder content, conductive material content, loading level, mixture density, or process conditions.

The computing device may be further configured to build the prediction model. The computing device may be further configured to perform a design of experiment (DOE) based on experimental data for a manufacturing process of the battery electrode plate, may be further configured to generate a process design table including design values of process factors for a plurality of different process design conditions through the DOE, may be further configured to obtain tortuosity data of the battery electrode plate by performing a simulation based on a discrete element method based on the process design table, and may be further configured to build the prediction model using the process design table and the tortuosity data as learning data.

The computing device may be further configured to add thickness data to the process design table using a linear regression model learned using actual process design data of the battery electrode plate and an actual measured value of the thickness of the battery electrode plate.

A method includes receiving, from a client device, a target process factor among a plurality of process factors associated with manufacturing a battery electrode plate, predicting, via a machine-learning model, a change in a characteristic of the battery electrode plate based on a change in a design value of the target process factor, generating information for selecting the target process factor based on predicting the change of the characteristic of the battery electrode plate, and transmitting the information to the client device for manufacturing the battery electrode plate, wherein based on determining that the plurality of process factors include fractions of a plurality of active materials and the target process factor is a fraction of at least one active material of the plurality of active materials, the computing device is further configured to automatically adjust the fractions of the plurality of active materials to make a sum of the fractions of the plurality of active materials to equal 100 in response to the design value of the target process factor being changed.

The method may further include outputting a characteristic information of the battery electrode plate based on input design values corresponding to the plurality of process factors.

The method may further include obtaining a tortuosity of the battery electrode plate based on the machine-learning model, and calculating an ionic resistance based on the tortuosity.

A method which does not form part of the appended claims includes receiving, from a client device, information for manufacturing a battery electrode plate, predicting a tortuosity of the battery electrode plate using the information and machine learning-based prediction model, calculating an ionic resistance of the battery electrode plate based on the tortuosity, and transmitting characteristic information including at least one of the tortuosity or the ionic resistance of the battery electrode plate to the client device for manufacturing the battery electrode plate.

According to both of said methods, the information may include design values for a plurality of process factors for manufacturing the battery electrode plate. The plurality of process factors may include at least one of a type of active material, a fraction and physical properties of the active material, binder content, conductive material content, loading level, mixture density, or process conditions.

The method may further include building the prediction model.

The building of the prediction model may include performing DOE based on experimental data for a manufacturing process of the battery electrode plate to generate a process design table including design values of process factors for a plurality of different process design conditions, may include performing a simulation based on a discrete element method based on the process design table to obtain tortuosity data of the battery electrode plate, and may include building the prediction model using the process design table and the tortuosity data as learning data.

The method may further include receiving, from the client device, selection information for selecting a target process factor among the plurality of process factors, predict, via the prediction model, a change in a characteristic of the battery electrode plate based on a change in a design value of the target process factor, may further include generating information for designing the target process factor based on predicting the change of the characteristic of the battery electrode plate, and may further include transmitting the information to the client device for manufacturing the battery electrode plate.

The generating of the information may further include selecting a characteristic value of the battery electrode plate that satisfies a condition based on predicting the change in the characteristic of the battery electrode plate, and may further include generating the information to include the selected characteristic value and the design value of the target process factor used to derive the characteristic value.

According to the present disclosure, in the process of designing the electrode plate of a secondary battery, and electrode plate characteristics according to design values of process factors, and design values of process factors for obtaining desired electrode plate characteristics may be predicted in advance.

Accordingly, the time required to derive optimal design conditions for obtaining desired electrode plate characteristics may be shortened, thereby reducing the cost and time required for the electrode plate manufacturing process of a secondary battery.

Effects that may be obtained from the present disclosure will not be limited to only the above described effects. In addition, other effects which are not described herein will become apparent to those skilled in the art from the following description.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The accompanying drawings illustrate embodiments of the present disclosure and, together with the foregoing disclosure, serve to describe aspects, features, and the technical scope of the present disclosure. However, the present disclosure is not to be construed as being limited to the drawings.
FIG. 1 is a block diagram of a system for designing a manufacturing process of a battery electrode plate according to an embodiment of the present disclosure.
FIG. 2 is a three-dimensional image of structural characteristics of a negative electrode plate generated based on a discrete element method according to an embodiment of the present disclosure.
FIGS. 3A to 3D are block diagrams of example user interfaces provided by a system for designing a manufacturing process of a battery electrode plate, according to an embodiment of the present disclosure.
FIG. 4 is a flow diagram of a process for building a prediction model for predicting the tortuosity of a battery electrode plate according to an embodiment of the present disclosure.
FIG. 5 is a flow diagram of a method for providing characteristic information of a battery electrode plate predicted according to process design conditions according to an embodiment of the present disclosure.
FIG. 6 is a flow diagram of a process for designing process factors for a manufacturing process of a battery electrode plate according to an embodiment of the present disclosure.

### DETAILED DESCRIPTION

Hereinafter, embodiments of the present disclosure will be described in detail with reference to the accompanying drawings. Hereinafter, embodiments of the present disclosure will be described in detail with reference to the accompanying drawings. The terms or words used in the specification and claims of the present disclosure should not be construed as being limited to typical or dictionary meanings, but should be construed as meanings and concepts conforming to the technical scope of the present disclosure based on the principle that the inventors can be their own lexicographers to appropriately define the concepts of the terms to explain the present invention in the best manner. Accordingly, it is to be understood that the detailed description, which will be disclosed along with the accompanying drawings, is intended to describe the embodiments of the present invention and is not intended to represent all technical ideas, aspects, and features of the present invention. Therefore, it should be understood that various equivalents and modifications can exist which can replace the embodiments described at the time of filing of the application.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

In addition, for ease of understanding of the present disclosure, the accompanying drawings are not drawn to real scale, but the dimensions of some components, layers, etc. may be exaggerated. In addition, the same reference numbers may be assigned to the same components.

Stating that two objects of comparison are "the same" means that they are "substantially the same." Therefore, the phrase "substantially identical" may include a deviation that is considered low in the art, for example, a deviation of less than 5%. In some embodiments, uniformity of a parameter in a certain region may mean uniformity in terms of an average.

Throughout the specification, unless otherwise stated, each component may be singular or plural.

It will also be understood that when a first element or layer is referred to as being present (or located or positioned) "on" or "beneath" a second element or layer, the first element may be disposed (or located or positioned) directly on or beneath the second element or may be disposed (or located or positioned) indirectly on or beneath the second element with a third element or layer being disposed (or located or positioned) between the first and second elements or layers.

It should be noted that if it is described in the specification that one component is "connected," "coupled," or "joined" to another component, a third component may be "connected," "coupled," and "joined" between the first and second components, or the first component may be directly connected, coupled, or joined to the second component. When it is described that an element is "electrically coupled" to another element, the element may be "directly coupled" to the other element or "coupled" to the other element through a third element.

When referring to "A and/or B" throughout the specification, it means A, B, or A and B, unless specifically stated to the contrary. That is, "and/or" includes all or any combination of the plurality of listed items. When referring to "C to D", it means that it is greater than or equal to C and less than or equal to D, unless otherwise specified.

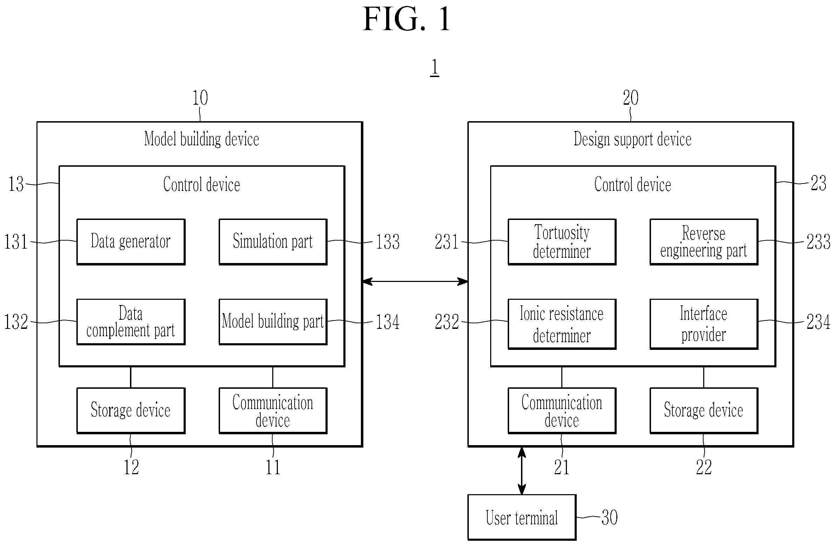

FIG. 1 is a block diagram of a system 1 for designing a manufacturing process of a battery electrode plate according to an embodiment of the present disclosure. In one embodiment, the battery electrode plate may include a negative electrode plate or a positive electrode plate of a secondary battery.

Referring to FIG. 1, the system 1 for designing a manufacturing process of a battery electrode plate according to an embodiment may include a model building device 10, a design support device 20, and a user terminal (also referred to as a client device) 30. The model building device 10 and design support device 20 may each be referred to as a computing device.

The model building device 10 may build a machine learning-based model (hereinafter referred to as "prediction model" or a machine-learning model) that predicts electrode plate characteristics (e.g., tortuosity and ionic resistance) according to the design conditions of the manufacturing process of the battery electrode plate.

The model building device 10 may include a communication device 11, a storage device 12, and a control device 13. The storage device 22 may take the form of volatile memory, non-volatile memory, persistent memory, flash memory, hard drive, and/or the like.

The communication device 11 may perform a communication function between the model building device 10 and an external device (for example, the design support device 20).

The storage device 12 may store various data and information processed by the model building device 10. For example, the storage device 12 may store a process design table generated by the control device 13, which will be described later. In some embodiments, the storage device 12 may store a prediction model built by the control device 13.

The storage device 12 may also store a program or computer instructions for operating the control device 13.

The control device 13 may control the overall operation of the model building device 10. The control device 13 may build a prediction model to predict the structural characteristics (e.g., tortuosity) of the battery electrode plate.

The control device 13 may include a data generator 131, a data complement part 132, a simulation part 133, and a model building part 134. Although the various components 131-134 of the control device 13 are assumed to be separate functional units, a person of skill in the art will recognize that the functionality of the components 131-134 may be combined or integrated into a single component, or further subdivided into further sub-components without departing from the scope of the present disclosure.

The data generator 131 may generate a process design table. The process design table may include process design data including design values of process factors (e.g., factor values of process factors) that affect the structural characteristics of the battery electrode plate. The data generator 131 may refer to previously performed experimental results related to battery electrode plate manufacturing to generate the process design data. The data generator 131 may obtain design values of a (e.g., each) process factor by performing a design of experiment (DOE) based on a full factorial design with reference to existing experiment results. For example, the data generator 131 may obtain design values such as active material type, active material fraction and physical properties, binder content, conductive material content, loading level, and mixture (or composition) density through DOE performance.

The data generator 131 may obtain process design data for one or more (e.g., a plurality of) different process design conditions and generate a process design table to include the obtained process design data. In some embodiments, the data generator 131 may generate a process design table to include design values for one or more (e.g., each) process factor for one or more (e.g., each) of a plurality of process design conditions. The data generator 131 may store the generated process design table in the storage device 12.

The data complement part 132 may add process design data that is missing when performing DOE among the process design data to be used (e.g., required) to simulate the structural characteristics of the battery electrode plate to the process design table. In some embodiments, the data complement part 132 may obtain the process design data that was not obtained through the data generator 131 among the process design data that is used to execute a discrete element method (DEM), and store the process design data in the process design table. For example, the data complement part 132 may obtain the thickness of the electrode plate in a state in which stress is removed through a press in the electrode plate manufacturing process as process design data, and add the thickness in the process design table.

The data complement part 132 may obtain process design data to be added to the process design table using values measured through previously performed experiments or machine learning-based predicted values. In the latter case, the data complement part 132 may obtain process design data using a linear regression model such as Ridge or Lasso to prevent overfitting. The linear regression model may be learned using DOE data including the actual process design information of the battery electrode plate and the corresponding process factor values that have been measured as learning data. For example, the linear regression model may be a model learned using actual process design information of battery electrode plate and actual measurement values of electrode plate thickness as learning data.

The simulation part 133 may retrieve process design data corresponding to one or more (e.g., each) process design conditions from the process design table, and simulate the structural characteristics of the battery electrode plate corresponding to the process design condition based on the data. The simulation part 133 may perform simulation based on the discrete element method. The simulation part 133 may simulate the components of the battery electrode plate (e.g., active material, binder, conductive material, current collector, etc.), the particle shape (e.g., spherical shape, non-spherical shape, etc.), particle size distribution, and/or verticality, using process design data corresponding to the process design condition. A person of skill in the art should recognize that other numerical methods that simulate the behavior of other particulate systems in addition or in lieu of the discrete element method may be used to simulate the components of the battery electrode plate.

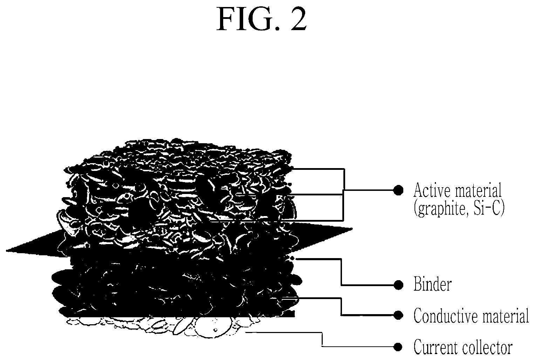

The simulation part 133 may obtain tortuosity data, which is a structural characteristic of the battery electrode plate, through the simulation. FIG. 2 is a three-dimensional image of the structural characteristics of a negative electrode plate generated based the discrete element method according to an embodiment of the present disclosure.

When the tortuosity data of the battery electrode plate corresponding to one or more (e.g., each) process design condition is obtained through simulation, the simulation part 133 may store the data in the storage device 12.

The model building part 134 may build a prediction model that predicts the tortuosity of the battery electrode plate based on process design conditions through machine learning, using the process design table and simulated tortuosity data using the process design table as learning data.

If process design data is input, the prediction model may predict and output the tortuosity of the battery electrode plate based on the process design data. The model building part 134 may build a prediction model using a portion of the process data stored in the storage device 12 (e.g., 80 % of the total process data) as training data for the prediction model, and a remaining portion (e.g., 20 % of the total process data) as validation data for the prediction model. In one embodiment, the prediction model for predicting the tortuosity of the battery electrode plate may be a linear regression model such as Ridge, Lasso, or Elastic net. The prediction model for predicting the tortuosity of the battery electrode plate may also be a nonlinear model such as Neural Network, Random Forest, Support Vector Machine, or Gradient Boosting Machine.

If the prediction model is built, the model building part 134 may store the prediction model in the storage device 12.

The control device 13 may include at least one processor. The processor may refer to a data processing device that is physically structured with circuits to perform functions (for example, functions of the data generator 131, a data complement part 132, a simulation part 133, and a model building part 134) expressed in code or instructions included in a program, such as a microprocessor, central processing unit (CPU), processor core, multiprocessor, application-specific integrated circuit (ASIC), and field programmable gate array (FPGA). The instructions of the program may be stored in a memory coupled to the processor.

The design support device 20 may receive the process design conditions for the manufacturing process of the battery electrode plate from the user terminal 30, and predict the electrode plate characteristics information (e.g., tortuosity and ionic resistance) corresponding to the received process design conditions using the prediction model built by the model building device 10. The design support device 20 may also provide predicted plate characteristic information to the user terminal 30 to support the user's process factor design.

The design support device 20 may receive information on a process factor (hereinafter referred to as "target process factor") selected as an object of interest from the user terminal 30, and simulate changes in the characteristic of the battery electrode plate according to the change in design value of the target process factor using the prediction model. The design support device 20 may also provide the user terminal 30 with design support information to guide a design of the target process factor based on simulation results.

The design support device 20 may include a communication device 21, a storage device 22, and a control device 23.

The communication device 21 may perform a communication function between the design support device 20 and an external device (e.g., the model building device 10, the user terminal 30, etc.).

The storage device 22 may store various data and information processed by the design support device 20. The storage device 22 may take the form of volatile memory, non-volatile memory, persistent memory, flash memory, hard drive, and/or the like. For example, the storage device 22 may store a prediction model used to predict tortuosity. The prediction model may be built by the model building device 10 and then transferred to the design support device 20 and stored in the storage device 22. In some embodiments, the storage device 22 may store data for building a user interface (UI) provided to the user terminal 30 by the design support device 20.

The storage device 22 may store a program or computer instructions for operating the control device 23, which will be described later.

The control device 23 may control the overall operation of the design support device 20. The control device 23 may include a tortuosity determiner 231, an ionic resistance determiner 232, a reverse engineering part 233, and an interface provider 234. Although the various components 231-234 of the control device 23 are assumed to be separate functional units, a person of skill in the art will recognize that the functionality of the components 231-234 may be combined or integrated into a single component, or further subdivided into further sub-components without departing from the scope of the present disclosure.

The tortuosity determiner 231 may predict the tortuosity of the battery electrode plate using the prediction model built by the model building device 10. The design support device 20 may receive process design information including the process factor design conditions (for example, design values of active material type, active material fraction and physical properties, binder content, conductive material content, loading level, and mixture (or composition) density) for the manufacturing process of the battery electrode plate from the user terminal 30. If process design information is received from the user terminal 30, the tortuosity determiner 231 may input the received process design information into the prediction model. In addition, if the prediction model outputs the tortuosity of the battery electrode plate in response to the input process design information, the tortuosity determiner 231 may determine the tortuosity as the tortuosity of the battery electrode plate obtained when manufacturing the battery electrode plate under the corresponding process design conditions.

The ionic resistance determiner 232 may receive the tortuosity predicted by the prediction model from the tortuosity determiner 231. The ionic resistance determiner 232 may calculate the ionic resistance representing the electrochemical characteristics of the battery electrode plate from the received tortuosity. Equation 1 below represents the relationship between the tortuosity plate and the ionic resistance of the battery electrode according to one embodiment of the present disclosure. $\begin{matrix}{τ}^{2} = {N}_{M} \times ε \\ {N}_{M} = \frac{{σ}_{0}}{{σ}_{eff}} = \frac{\left(Rion\times A\times {σ}_{0}\right)}{d}\end{matrix}$

In Equation 1 above, τ represents the tortuosity of the battery electrode plate, N_{M} represents a MacMullin number, σ₀ represents the conductivity value of pure liquid electrolyte, σ_{eff} represents the conductivity value when the separator and liquid electrolyte are combined, ε represents the porosity of the separator, A represents the size of the battery electrode plate, d represents the thickness of the battery electrode plate, and Rᵢₒₙ represents the ionic resistance of the battery electrode plate.

The ionic resistance determiner 232 may calculate the ionic resistance from the tortuosity of the battery electrode plate based on Equation 1 above. The ionic resistance determiner 232 may correct the ionic resistance calculated using Equation 1 by referring to the ionic resistance previously measured through experiment. In one embodiment, the storage device 22 may store the tortuosity and the ionic resistance of the battery electrode plate actually measured during the experiment of the battery electrode plate as reference data in the form of a lookup table. The ionic resistance determiner 232 may compare the reference data stored in the storage device 22 with the ionic resistance calculated using Equation 1 above and correct the ionic resistance according to the comparison result.

The reverse engineering part 233 may provide design support information that supports factor value design for the target process factor selected as an object of interest by the user among a plurality of process factors.

The reverse engineering part 233 may receive reverse engineering information including selection information about the target process factor from the user terminal 30. If reverse engineering information is received, the reverse engineering part 233 may sequentially change the design values of the target process factor and input them into the prediction model. As a result, the reverse engineering part 233 may obtain the characteristic values (tortuosity, ionic resistance, etc.) of the battery electrode plate. In some embodiments, the reverse engineering part 233 may obtain the tortuosity using the prediction model, and obtain the ionic resistance using the obtained tortuosity and Equation 1 above. The reverse engineering part 233 may monitor changes in the characteristics of the battery electrode plate according to changes in the design value of the target process factor, based on the obtained information on the characteristics of the battery electrode plate.

The reverse engineering information received from the user terminal 30 may further include design range information of the target process factor. The design range information may include, for example, upper and lower limits of corresponding process factors, and change intervals. The reverse engineering part 233 may control the change range and change interval of the design value of the target process factor based on the received design range information. In some embodiments, the reverse engineering part 233 may gradually increase or decrease the design value of the corresponding process factor within the design range consisting of an upper limit and a lower limit by a set change interval.

When there are multiple target process factors, the reverse engineering part 233 may generate one or more (e.g., all) design value combinations that may occur within the design range of the target process factors. In some embodiments, the reverse engineering part 233 may sequentially input the generated design value combinations into the prediction model.

Among the process factors input to the prediction model, the design values of the remaining process factors that are not the target process factor may be automatically set to default values. The design values of the remaining process factors other than the target process factor may be automatically set to the design values input from the previous prediction of the prediction model. The design values of the remaining process factors other than the target process factor may be set to values received from the user terminal 30. In some embodiments, the reverse engineering part 233 may additionally receive design values of process factors that are not of interest from the user terminal 30.

If the target process factor is the fraction of active materials, the reverse engineering part 233 may automatically adjust the fraction of each active material so that the sum of the fractions of the active materials becomes 100. In some embodiments, whenever the reverse engineering part 233 changes the fraction of the active material selected as an object of interest, the reverse engineering part 233 may also adjust the fraction of the remaining active materials so that the sum of the fractions of the active materials becomes 100.

The reverse engineering part 233 may analyze the characteristic information of the battery electrode plate obtained by changing the design value of the target process factor and select at least one reference datum to be included in the design support information provided to the user terminal 30. In some embodiments, the reverse engineering part 233 may change the design values of the target process factor, analyze the obtained characteristic information, select at least one piece of characteristic information that satisfies the specified conditions, and select the design values of the target process factor used to derive the selected characteristic information as reference data.

The reverse engineering information received from the user terminal 30 may further include target characteristic information of the battery electrode plate. The target characteristic information may represent characteristic values of the battery electrode plate that the user wishes to obtain.

The reverse engineering part 233 may change the design value of the target process factor and select reference data by comparing the obtained characteristic information of the battery electrode plate with the target characteristic information.

The reverse engineering part 233 may arrange the obtained characteristic information of the battery electrode plate in the order of the smallest difference from the target characteristic information. In some embodiments, the reverse engineering part 233 may select at least one piece of characteristic information selected in the order of the smallest difference from the target characteristic information and the design value of the target process factor used to derive the selected at least one piece of characteristic information as reference data. For example, if the target characteristic information includes a target ion resistance, the reverse engineering part 233 may change the design value of the target process factor and select at least one piece of selected ionic resistance in the order of the smallest difference from the target ion resistance among the obtained ionic resistances as reference data. In some embodiments, the reverse engineering part 233 may select the design value of the target process factor used to derive the ionic resistance selected as reference data.

The reverse engineering part 233 may change the design value of the target process factor and arrange the obtained battery electrode plate characteristic information in order of size. In some embodiments, the reverse engineering part 233 may select at least one piece of characteristic information selected in order of small size or large size, and select the design value of the target process factor used to derive the selected at least one piece of characteristic information as reference data. For example, the reverse engineering part 233 may select at least one ionic resistance selected in order of the smallest size among the ion resistances obtained using the prediction model as reference data.

In some embodiments, the reverse engineering part 233 may select the design value of the target process factor used to derive the selected ionic resistance as reference data.

If reference data is selected as described above, the reverse engineering part 233 may generate design support information to include the selected reference data.

The reverse engineering part 233 may generate a graph showing a trend of changes in the characteristics of the battery electrode plate according to the change in the design value of the target process factor, based on the characteristic information of the battery electrode plate obtained by changing the design value of the target process factor. The reverse engineering part 233 may additionally include graph data for visualizing such graphs in the design support information.

If the user terminal 30 connects to the design support device 20, the interface provider 234 may provide the user terminal 30 with a user interface (UI) to support the design of process factors of the battery electrode plate.

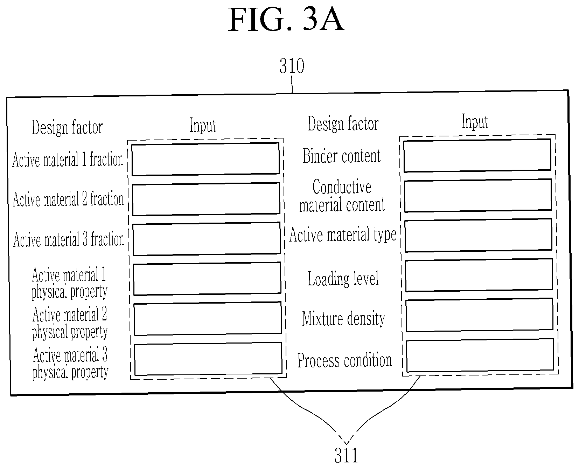

FIGS. 3A to 3D are layout diagrams of example Uls provided by the system for designing a manufacturing process of a battery electrode plate, according to an embodiment of the present disclosure.

The interface provider 234 may provide the user terminal 30 with a UI for receiving design conditions for the manufacturing process of the battery electrode plate from the user terminal 30.

FIG. 3A is a layout diagram of an example UI 310 for receiving design conditions for the manufacturing process of the battery electrode plate.

Referring to FIG. 3A, the UI 310 may include a list of process factors (see the bottom of 'Design Factors' in FIG. 3A) required to predict the tortuosity and the ionic resistance of the battery electrode plate. For example, the UI 310 may include the fraction and physical properties of each active material, binder content, conductive material content, active material type, loading level, mixture density, process conditions, etc. as process factors. Here, the process conditions may include process conditions (for example, time, pressure, temperature) that affect the structural characteristics of the battery electrode plate. Taking a negative electrode plate as an example, process conditions may include process conditions of a press process that greatly affect the microstructure of the negative electrode plate.

The UI 310 may further include an input window 311 through which the user may input desired design values for each process factor.

If the UI 310 is received from the design support device 20, the user terminal 30 may display the UI 310 on the screen of the user terminal 30. In some embodiments, if a design value is input from the user through the input window 311 on the UI 310, the user terminal 30 may transmit the design value to the design support device 20.

If the design value of each process factor is received from the user terminal 30, the interface provider 234 may store the design value in the storage device 22. The design values stored in the storage device 22 may be used by the tortuosity determiner 231 to predict the tortuosity.

The active material of the battery electrode plate may be used in the form of a mixture of several active materials. If the sum of the fractions of the active materials received from the user terminal 30 is not 100, the interface provider 234 may automatically correct the fraction of each active material so that the sum of the fractions becomes 100. If the fraction of each active material is corrected, the interface provider 234 may store the corrected fraction value in the storage device 22. Accordingly, the tortuosity determiner 231 may perform tortuosity prediction using the corrected fraction value. The interface provider 234 may also correct the input UI 310 to include the corrected fraction value and provide the corrected input UI 310 to the user terminal 30.

The interface provider 234 may provide the user terminal 30 with a UI for outputting the characteristics (tortuosity and ionic resistance) of the battery electrode plate predicted by the design support device 20.

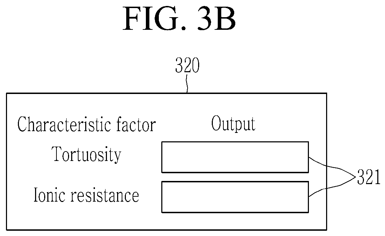

FIG. 3B is a layout diagram of an example UI 320 for outputting characteristic information of the battery electrode plate predicted by the design support device 20.

Referring to FIG. 3B, the UI 320 may include a list of characteristic factors (e.g., tortuosity and ionic resistance) of the battery electrode plate whose values are predicted by the design support device 20, and an output window 321 in which the predicted value of each characteristic factor is displayed.

If the UI 320 is received from the design support device 20, the user terminal 30 may display the UI 320 on the screen of the user terminal 30. The user may verify the suitability of the process design conditions by checking the characteristic information of the battery electrode plate according to the process design conditions through the UI 320 output on the user terminal 30.

The interface provider 234 may provide the user terminal 30 with a UI for receiving reverse engineering information from the user terminal 30.

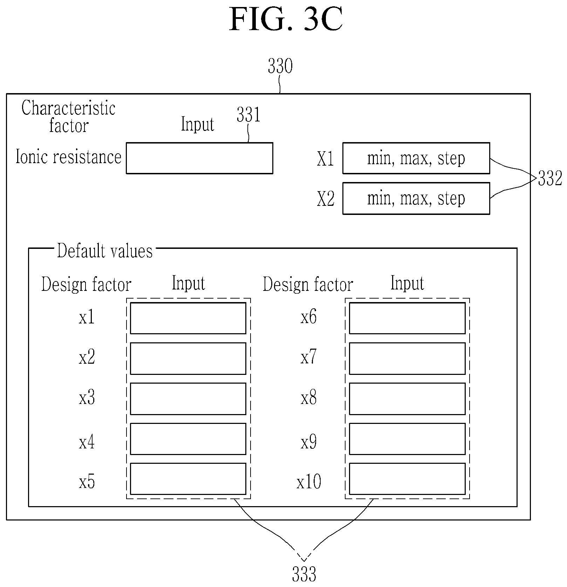

FIG. 3C is a layout diagram of an example UI 330 for receiving reverse engineering information.

Referring to FIG. 3C, the UI 330 may include an input window 331 for receiving target characteristic information. For example, the UI 330 may include the input window 331 for receiving a target value of ionic resistance.

The UI 330 may further include an input window 332 for receiving a list of target process factors (see X1 and X2 in FIG. 3C) selected by the user and design range information for each target process factor. For example, the UI 330 may further include an input window 332 for receiving input of the lower limit value, upper limit value, and change interval of the target process factor.

The UI 330 may further include an input/output window 333 for outputting or receiving design values of the remaining process factors (see x1 to x10 in FIG. 3C) other than the target process factors. If the design values of the remaining process factors other than the target process factors are automatically set by the design support device 20, the UI 330 may display the automatically set design values in the input/output window 333. If the user wishes to directly set the design values of the remaining process factors other than the target process factors, the UI 330 may receive design values through the input/output window 333.

If the UI 330 is received from the design support device 20, the user terminal 30 may display the UI 330 on the screen of the user terminal 30. The user terminal 30 may receive target characteristic information and design range information of the target process factor through the input windows 331 and 332 on the UI 330. In some embodiments, the user terminal 30 may transmit reverse engineering information generated based on the input information to the design support device 20. When reverse engineering information is received from the user terminal 30, the interface provider 234 may store the received reverse engineering information in the storage device 22. The reverse engineering information stored in the storage device 22 may be used by the reverse engineering part 233 to generate design support information.

The user terminal 30 may receive design values for remaining process factors other than the target process factors through the input/output window 333 on the UI 330. The user terminal 30 may also transmit the input design value to the design support device 20 if the design value of the process parameter, which is not the target process factor, is input into the input/output window 333. The interface provider 234 that received the input design value may store the received design value in the storage device 22. The design values stored in the storage device 22 may be used to generate design support information in the reverse engineering part 233.

The interface provider 234 may also provide the user terminal 30 with a UI for outputting design support information obtained through reverse engineering.

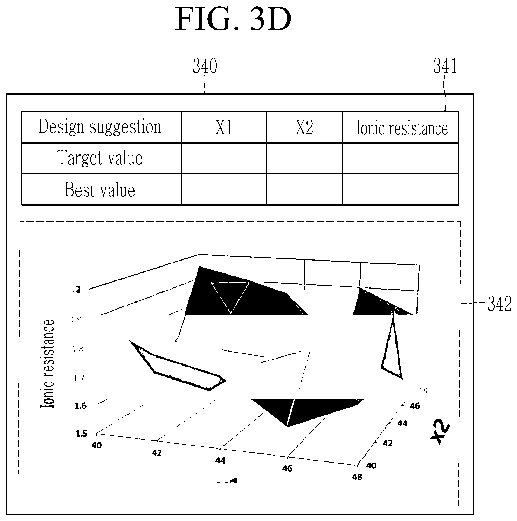

FIG. 3D is a layout diagram of an example UI 340 for outputting design support information obtained through reverse engineering.

Referring to FIG. 3D, the UI 340 may include a table 341 and a graph 342 for outputting design support information.

In the 'Target value' row of table 341, the ionic resistance derived closest to the target ionic resistance through reverse engineering and the design values of the target process factors X1 and X2 used to derive the ionic resistance may be output as reference data. In the 'Best value' row of table 341, the minimum ionic resistance derived through reverse engineering and the design values of the target process factors X1 and X2 used to derive the minimum ionic resistance may be output as reference data.

The graph 342 may represent a change trend in ionic resistance according to changes in design values of the target process factors X1 and X2.

If the UI 340 including design support information is received from the design support device 20, the user terminal 30 may display the UI 340 on the screen of the user terminal 30 and provide the UI 340 to the user.

The control device 23 may include at least one processor. At least one processor configuring the control device 23 may perform the functions of the tortuosity determiner 231, the ionic resistance determiner 232, the reverse engineering part 233, and the interface provider 234 represented by codes or instructions included in the program.

The design support device 20 may provide the process design support function for the manufacturing process of the battery electrode plate described above to the user terminal 30 in the form of an online tool.

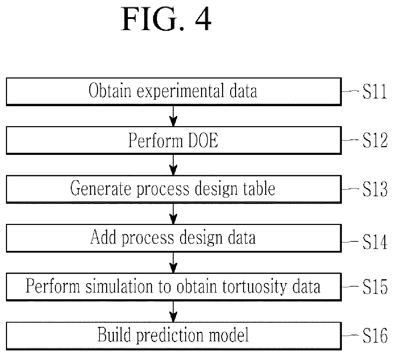

Hereinafter, with reference to FIGS. 4 to 6, a detailed description will be given of how the system 1 supports process design for the manufacturing process of the battery electrode plate according to one or more embodiments.

FIG. 4 is a flow diagram of a process for building a prediction model for predicting the tortuosity of the battery electrode plate according to an embodiment of the present disclosure. The method of FIG. 4 may be performed by the model building device 10 described with reference to FIG. 1.

Referring to FIG. 4, the model building device 10 may obtain previously performed experimental data related to the manufacturing process of the battery electrode plate (S11). The model building device 10 may perform DOE based on the experimental data obtained in act S11 (S12).

The model building device 10 may obtain process design data for a plurality of different process design conditions from the results of the DOE performed in act S12, and generate a process design table to include the data (S13). The process design data may include design values of one or more (e.g., each) process factor. In some embodiments, the process design table may include design values for the one or more (e.g. each) process factor for one or more (e.g., each) of a plurality of process design conditions.

The model building device 10 may obtain missing process design data from the process design table among the process design data to be used (e.g., required) to simulate the structural characteristics of the battery electrode plate, and add the data to the process design table (S14).

In act S14, the model building device 10 may additionally obtain the thickness of the electrode plate in a state in which stress is removed through a press in the manufacturing process of the battery electrode plate as part of the process design data, and add the data to the process design table.

In act S14, the model building device 10 may obtain process design data to be added to the process design table using values measured through previously performed experiments or machine learning-based predicted values. In the latter case, the model building device 10 may obtain process design data using a linear regression model.

The model building device 10 may perform a simulation based on the discrete element method using the process design table and obtain tortuosity data of the battery electrode plate through the simulation (S15).

In step S15, the model building device 10 may retrieve process design data corresponding to one or more (e.g., each) process design condition from the process design table, and simulate the structural characteristics of the battery electrode plate corresponding to the process design condition based on the data. In some embodiments, the model building device 10 may simulate the components of the battery electrode plate (e.g., active material, binder, conductive material, current collector, etc.), the particle shape (e.g., spherical shape, non-spherical shape), particle size distribution, and verticality, using the process design data corresponding to the one or more (e.g., each) process design condition. The model building device 10 may obtain tortuosity data, which may be deemed to be a structural characteristic of the battery electrode plate, through the simulation.

If the tortuosity data corresponding to one or more (e.g., each) process design condition is obtained through simulation, the model building device 10 may build a prediction model that predicts the tortuosity of the battery electrode plate that varies depending on the process design conditions through machine learning (S16).

In act S16, the model building device 10 may train the prediction model using the process design table and tortuosity data as learning data. The trained model may predict and output the tortuosity of the battery electrode plate based on input process design data (e.g., input design values of one or more (e.g., each) process factor).

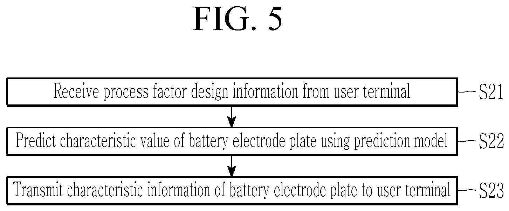

FIG. 5 is a flow diagram of a method for providing characteristic information of the battery electrode plate predicted according to process design conditions according to an embodiment of the present disclosure. The method of FIG. 5 may be performed by the design support device 20 described with reference to FIG. 1.

Referring to FIG. 5, the design support device 20 may receive process factor design information of the manufacturing process of the battery electrode plate from the user terminal (S21). The process factor design information may include design values such as active material type, active material fraction and physical properties, binder content, conductive material content, loading level, and mixture (or composition) density, which may be process factors of the manufacturing process of the battery electrode plate.

If process design information is received from the user terminal 30, the design support device 20 may predict the characteristic values of the battery electrode plate using the prediction model built by the model building device 10 (S22).

In act S22, the design support device 20 may input the received process design information into the prediction model to obtain a tortuosity representing the structural characteristics of the battery electrode plate. Once the tortuosity of the battery electrode plate is obtained, the design support device 20 may use the tortuosity to obtain ionic resistance, which is an electrochemical characteristic, of the battery electrode plate.

If the characteristic value of the battery electrode plate is obtained through act S22, the design support device 20 may transmit the characteristic information of the battery electrode plate including the obtained characteristic value to the user terminal 30 (S23).

When characteristic information of the battery electrode plate corresponding to design conditions input by the user from the design support device 20 is provided, the user terminal 30 may display a UI including the characteristic information on the screen of the user terminal 30. The user may verify whether the current process design is suitable for obtaining the target characteristics of the battery electrode plate by checking the characteristic information of the battery electrode plate according to the design conditions through the UI output on the user terminal 30. In some embodiments, the battery electrode plate is manufactured according to the current process design based on verifying that the current process design is suitable for obtaining the target characteristics of the battery electrode plate.

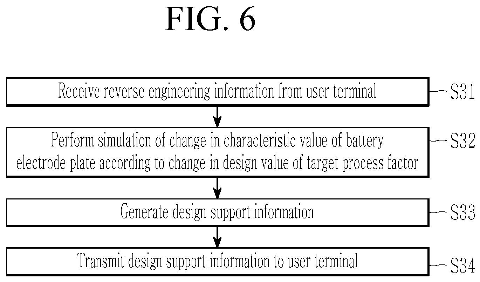

FIG. 6 is a flow diagram of a process for designing a manufacturing process of a battery electrode plate according to an embodiment of the present disclosure.

The method of FIG. 6 may be performed by the design support device 20 described with reference to FIG. 1.

Referring to FIG. 6, the design support device 20 may receive reverse engineering information from the user terminal 30 (S31). Reverse engineering information may include selection information about target process factors selected by the user. The reverse engineering information may further include design range information of the target process factor. The reverse engineering information may further include target characteristic information of the battery electrode plate. The target characteristic information may represent characteristic values of the battery electrode plate that the user wishes to obtain.

Based on reverse engineering information, the design support device 20 may simulate a change in the characteristic value of the battery electrode plate according to a change in the design value of the target process factor (S32).

In step S32, the design support device 20 may sequentially change the design values of the target process factors and input the design values into the prediction model to obtain characteristic values (tortuosity, ionic resistance) of the battery electrode plate.

In step S32, the design support device 20 may determine the change range and change interval of the design value of the target process factor based on design range information in response to the design value of the target process factor being changed. In some embodiments, the design support device 20 may gradually increase or decrease the design value of the corresponding target process factor within the design range consisting of the upper limit and lower limit by a set change interval.

In step S32, when there are multiple target process factors, the design support device 20 may generate various (e.g., all) design value combinations that may occur within the design range of the target process factors. In some embodiments, the design support device 20 may sequentially input the generated design value combinations into the prediction model to obtain characteristic values (tortuosity and ionic resistance) of the battery electrode plate.

If the simulation in act S32 is completed, the design support device 20 may generate design support information to be provided to the user terminal 30 based on the simulation results (S33).

In act S33, the design support device 20 may select at least one piece of characteristic information selected according to a condition (e.g., a predetermined condition) among the characteristic information of the battery electrode plate obtained through simulation as reference data to be included in the design support information. For example, the design support device 20 may select at least one piece of characteristic information selected in order of a small difference from the target characteristic information among the characteristic information obtained through simulation, and the design value of the target process factor used to derive the selected characteristic information as reference data. In some embodiments, the design support device 20 may select at least one piece of characteristic information selected in order of a small difference (or in order of a large difference) among the characteristic information obtained through simulation, and the design value of the target process factor used to derive the selected characteristic information as reference data. In some embodiments, the design support device 20 selects at least one piece of characteristic information based on the value of the one piece of characteristic information having a difference with the design value of the target processor factor that satisfies a criterion. The criterion may be that the difference is a smallest (or largest) difference, or a difference that is below (or above) a threshold value.

In act S33, the design support device 20 may generate a graph showing a change in the characteristics of the battery electrode plate according to the change in the design value of the target process factor based on the simulation results. The design support device 20 may additionally include graph data for visualizing such graphs in the design support information.

Once design support information is generated, the design support device 20 may transmit the design support information to the user terminal 30 (S34).

If design support information is received from the design support device 20, the user terminal 30 may display a UI including the design support information on the screen of the user terminal 30. Accordingly, the user may refer to the design support information displayed on the screen of the user terminal 30 and design the optimal factor value of the target process factor of interest. In some embodiments, the battery electrode plate is manufactured based on the optimal factor value.

While the embodiments of the present disclosure have been described in detail, it is to be understood that the disclosure is not limited to the disclosed embodiments, but on the contrary, is intended to cover various modifications and equivalent arrangements included within the scope of the present disclosure as defined by the appended claims.

### Description of symbols

1: Process design support system
10: Model building device
11: Communication device of model building device
12: Storage device of model building device
13: Control device of model building device
131: Data generator
132: Data complement part
133: Simulation part
134: Model building part
20: Design support device
21: Communication device of design support device
22: Storage device of design support device
23: Control device of design support device
231: Tortuosity determiner
232: Ionic resistance determiner
233: Reverse engineering part
234: Interface provider
30: User terminal

## Claims

1. A system (1) comprising
a computing device configured to:
receive, from a client device, a target process factor among a plurality of process factors associated with manufacturing a battery electrode plate;
predict, via a machine-learning model, a change in a characteristic of the battery electrode plate based on a change in a design value of the target process factor;
generate information for selecting the target process factor based on predicting the change of the characteristic of the battery electrode plate; and
transmit the information to the client device for manufacturing the battery electrode plate;
**characterised in that**,
based on determining that the plurality of process factors include fractions of a plurality of active materials and the target process factor is a fraction of at least one active material of the plurality of active materials, the computing device is further configured to automatically adjust the fractions of the plurality of active materials to make a sum of the fractions of the plurality of active materials to equal 100 in response to the design value of the target process factor being changed.

2. The system (1) as claimed in claim 1, wherein the machine-learning model is configured to output a characteristic information of the battery electrode plate based on input design values corresponding to the plurality of process factors.

3. The system (1) as claimed in claim 2, wherein the computing device is further configured to:
obtain a tortuosity of the battery electrode plate based on the machine-learning model; and
calculate an ionic resistance based on the tortuosity.

4. The system (1) as claimed in claim 2 or 3, wherein the computing device is further configured to automatically set the input design values corresponding to the plurality of process factors other than the target process factor as design values used in a previous prediction of the machine-learning model.

5. The system (1) as claimed in any one of claims 2 to **4,** wherein the computing device is further configured to receive the input design values corresponding to the plurality of process factors other than the target process factor from the client device.

6. The system (1) as claimed in any one of the preceding claims, wherein the computing device is further configured to:
receive design range information including a design value change range and change interval of the target process factor from the client device; and
increase or decrease the design value of the target process factor based on the design range information.

7. The system (1) as claimed in any one of the preceding claims, wherein the computing device is further configured to:
select a characteristic value of the battery electrode plate that satisfies a condition based on predicting the change in the characteristic of the battery electrode plate; and
generate the information to include the selected characteristic value and the design value of the target process factor used to derive the characteristic value.

8. The system (1) as claimed in claim 7, wherein the computing device is further configured to:
receive a target characteristic value from the client device;
select at least one second characteristic value based on predicting the change in the characteristic of the battery electrode plate based on the second characteristic value having a difference with the target characteristic value that satisfies a criterion; and
generate the information to include the selected at least one second characteristic value and the design value of the target process factor used to derive at least one second characteristic value.

9. The system (1) as claimed in claim 8, wherein the characteristic information includes an ionic resistance of the battery electrode plate, and the computing device is further configured to:
select at least one ionic resistance among a plurality of ionic resistances obtained based on predicting the change in the characteristic of the battery electrode plate, wherein the at least one ionic resistance has a smallest difference from a target ionic resistance received from the client device; and
generate the information to include the selected at least one ionic resistance and the design value of the target process factor used to derive the selected at least one ionic resistance.

10. A method comprising:
receiving, from a client device, a target process factor among a plurality of process factors associated with manufacturing a battery electrode plate;
predicting, via a machine-learning model, a change in a characteristic of the battery electrode plate based on a change in a design value of the target process factor;
generating information for selecting the target process factor based on predicting the change of the characteristic of the battery electrode plate; and
transmitting the information to the client device for manufacturing the battery electrode plate;
**characterised in that**,
based on determining that the plurality of process factors include fractions of a plurality of active materials and the target process factor is a fraction of at least one active material of the plurality of active materials, the computing device is further configured to automatically adjust the fractions of the plurality of active materials to make a sum of the fractions of the plurality of active materials to equal 100 in response to the design value of the target process factor being changed.

11. The method as claimed in claim 10, further comprising outputting a characteristic information of the battery electrode plate based on input design values corresponding to the plurality of process factors.

12. The method as claimed in claim 11, further comprising:
obtaining a tortuosity of the battery electrode plate based on the machine-learning model; and
calculating an ionic resistance based on the tortuosity.

13. The method as claimed in any one of claims 10 to 12, wherein the information includes design values for the plurality of process factors for manufacturing the battery electrode plate, and the plurality of process factors includes a type of active material, a fraction and physical properties of the active material, binder content, conductive material content, loading level, mixture density, or process conditions.

14. The method as claimed in any one of claims 10 to 13, further comprising building the prediction model, wherein the building of the prediction model comprises:
performing a design of experiment, DOE, based on experimental data for a manufacturing process of the battery electrode plate to generate a process design table (341) including design values of process factors for a plurality of different process design conditions;
performing a simulation based on a discrete element method based on the process design table (341) to obtain tortuosity data of the battery electrode plate; and
building the prediction model using the process design table (341) and the tortuosity data as learning data.

15. The method as claimed in any one of claims 10 to 14, wherein the generating of the information comprises:
selecting a characteristic value of the battery electrode plate that satisfies a condition based on predicting the change in the characteristic of the battery electrode plate; and
generating the information to include the selected characteristic value and the design value of the target process factor used to derive the characteristic value.

## Patentansprüche

1. System (1), umfassend
eine Rechenvorrichtung, die dazu konfiguriert ist:
von einer Client-Vorrichtung einen Zielprozessfaktor aus einer Vielzahl von Prozessfaktoren zu empfangen, die mit der Herstellung einer Batterieelektrodenplatte assoziiert sind;
über ein Modell für maschinelles Lernen eine Änderung einer Eigenschaft der Batterieelektrodenplatte auf der Grundlage einer Änderung eines Auslegungswerts des Zielprozessfaktors vorherzusagen;
Informationen zur Auswahl des Zielprozessfaktors auf der Grundlage der Vorhersage der Änderung der Eigenschaft der Batterieelektrodenplatte zu erzeugen; und
die Informationen an die Client-Vorrichtung zur Herstellung der Batterieelektrodenplatte zu übertragen;
**dadurch gekennzeichnet, dass**
auf der Grundlage der Feststellung, dass die Vielzahl von Prozessfaktoren Anteile einer Vielzahl von aktiven Materialien umfasst und der Zielprozessfaktor ein Anteil mindestens eines aktiven Materials der Vielzahl von aktiven Materialien ist, die Rechenvorrichtung ferner dazu konfiguriert ist, als Reaktion darauf, dass der Auslegungswert des Zielprozessfaktors geändert wird, die Anteile der Vielzahl von aktiven Materialien automatisch anzupassen, um eine Summe der Anteile der Vielzahl von aktiven Materialien auf 100 zu bringen.

2. System (1) nach Anspruch 1, wobei das Modell für maschinelles Lernen dazu konfiguriert ist, auf der Grundlage von eingegebenen Auslegungswerten, die der Vielzahl von Prozessfaktoren entsprechen, eine Eigenschaftsinformation der Batterieelektrodenplatte auszugeben.

3. System (1) nach Anspruch 2, wobei die Rechenvorrichtung ferner dazu konfiguriert ist:
eine Tortuosität der Batterieelektrodenplatte auf der Grundlage des Modells für maschinelles Lernen zu erhalten; und
einen Ionenwiderstand auf der Grundlage der Tortuosität zu berechnen.

4. System (1) nach Anspruch 2 oder 3, wobei die Rechenvorrichtung ferner dazu konfiguriert ist, die eingegebenen Auslegungswerte, die der Vielzahl von Prozessfaktoren außer dem Zielprozessfaktor entsprechen, automatisch als Auslegungswerte festzulegen, die bei einer vorherigen Vorhersage des Modells für maschinelles Lernen verwendet werden.

5. System (1) nach einem der Ansprüche 2 bis 4, wobei die Rechenvorrichtung ferner dazu konfiguriert ist, die eingegebenen Auslegungswerte, die der Vielzahl von Prozessfaktoren außer dem Zielprozessfaktor entsprechen, von der Client-Vorrichtung zu empfangen.

6. System (1) nach einem der vorstehenden Ansprüche, wobei die Rechenvorrichtung ferner dazu konfiguriert ist:
Auslegungsbereichsinformationen, die einen Auslegungswert-Änderungsbereich und ein Änderungsintervall des Zielprozessfaktors enthalten, von der Client-Vorrichtung zu empfangen; und
den Auslegungswert des Zielprozessfaktors auf der Grundlage der Auslegungsbereichsinformationen zu erhöhen oder zu verringern.

7. System (1) nach einem der vorstehenden Ansprüche, wobei die Rechenvorrichtung ferner dazu konfiguriert ist:
einen Eigenschaftswert der Batterieelektrodenplatte auszuwählen, der eine Bedingung erfüllt, basierend auf der Vorhersage der Änderung der Eigenschaft der Batterieelektrodenplatte; und
die Informationen so zu erzeugen, dass sie den ausgewählten Eigenschaftswert und den Auslegungswert des Zielprozessfaktors, der zur Ableitung des Eigenschaftswerts verwendet wird, enthalten.

8. System (1) nach Anspruch 7, wobei die Rechenvorrichtung ferner dazu konfiguriert ist:
einen Zieleigenschaftswert von der Client-Vorrichtung zu empfangen;
mindestens einen zweiten Eigenschaftswert auf der Grundlage der Vorhersage der Änderung der Eigenschaft der Batterieelektrodenplatte auszuwählen, basierend darauf, dass der zweite Eigenschaftswert einen Unterschied zum Zieleigenschaftswert aufweist, der ein Kriterium erfüllt; und
die Informationen so zu erzeugen, dass sie den ausgewählten mindestens einen zweiten Eigenschaftswert und den Auslegungswert des Zielprozessfaktors enthalten, der zur Ableitung des mindestens einen zweiten Eigenschaftswerts verwendet wird.

9. System (1) nach Anspruch 8, wobei die Eigenschaftsinformation einen Ionenwiderstand der Batterieelektrodenplatte enthält und die Rechenvorrichtung ferner dazu konfiguriert ist:
mindestens einen Ionenwiderstand aus einer Vielzahl von Ionenwiderständen auszuwählen, die auf der Grundlage der Vorhersage der Änderung der Eigenschaft der Batterieelektrodenplatte erhalten werden, wobei der mindestens eine Ionenwiderstand den geringsten Unterschied zu einem von der Client-Vorrichtung empfangenen Ziel-Ionenwiderstand aufweist; und
die Informationen so zu erzeugen, dass sie den ausgewählten mindestens einen Ionenwiderstand und den Auslegungswert des Zielprozessfaktors enthalten, der zur Ableitung des ausgewählten mindestens einen Ionenwiderstands verwendet wird.

10. Verfahren, umfassend:
Empfangen eines Zielprozessfaktors aus einer Vielzahl von Prozessfaktoren, die mit der Herstellung einer Batterieelektrodenplatte assoziiert sind, von einer Client-Vorrichtung;
Vorhersagen einer Änderung einer Eigenschaft der Batterieelektrodenplatte auf der Grundlage einer Änderung eines Auslegungswerts des Zielprozessfaktors über ein Modell für maschinelles Lernen;
Erzeugen von Informationen zur Auswahl des Zielprozessfaktors auf der Grundlage der Vorhersage der Änderung der Eigenschaft der Batterieelektrodenplatte; und
Übertragen der Informationen an die Client-Vorrichtung zur Herstellung der Batterieelektrodenplatte;
**dadurch gekennzeichnet, dass**
auf der Grundlage der Feststellung, dass die Vielzahl von Prozessfaktoren Anteile einer Vielzahl von aktiven Materialien umfasst und der Zielprozessfaktor ein Anteil mindestens eines aktiven Materials der Vielzahl von aktiven Materialien ist, die Rechenvorrichtung ferner dazu konfiguriert ist, als Reaktion darauf, dass der Auslegungswert des Zielprozessfaktors geändert wird, die Anteile der Vielzahl von aktiven Materialien automatisch anzupassen, um eine Summe der Anteile der Vielzahl von aktiven Materialien auf 100 zu bringen.

11. Verfahren nach Anspruch 10, umfassend ferner das Ausgeben einer Eigenschaftsinformation der Batterieelektrodenplatte auf der Grundlage von eingegebenen Auslegungswerten, die der Vielzahl von Prozessfaktoren entsprechen.

12. Verfahren nach Anspruch 11, umfassend ferner:
das Erhalten einer Tortuosität der Batterieelektrodenplatte auf der Grundlage des Modells für maschinelles Lernen; und
das Berechnen eines Ionenwiderstands auf der Grundlage der Tortuosität.

13. Verfahren nach einem der Ansprüche 10 bis 12, wobei die Informationen Auslegungswerte für die Vielzahl von Prozessfaktoren zur Herstellung der Batterieelektrodenplatte umfassen und die Vielzahl von Prozessfaktoren eine Art des aktiven Materials, einen Anteil und physikalische Eigenschaften des aktiven Materials, den Bindemittelgehalt, den Gehalt an leitfähigem Material, den Beladungsgrad, die Mischungsdichte oder Prozessbedingungen umfassen.

14. Verfahren nach einem der Ansprüche 10 bis 13, umfassend ferner das Erstellen des Vorhersagemodells, wobei das Erstellen des Vorhersagemodells Folgendes umfasst:
Durchführen einer Versuchsauslegung, DOE, auf der Grundlage von Versuchsdaten für einen Herstellungsprozess der Batterieelektrodenplatte, um eine Prozessauslegungstabelle (341) zu erzeugen, die Auslegungswerte von Prozessfaktoren für eine Vielzahl verschiedener Prozessauslegungsbedingungen enthält;
Durchführen einer Simulation auf der Grundlage einer Diskretelementmethode basierend auf der Prozessauslegungstabelle (341), um Tortuositätsdaten der Batterieelektrodenplatte zu erhalten; und
Erstellen des Vorhersagemodells unter Verwendung der Prozessauslegungstabelle (341) und der Tortuositätsdaten als Lerndaten.

15. Verfahren nach einem der Ansprüche 10 bis 14, wobei das Erzeugen der Informationen Folgendes umfasst:
Auswählen eines Eigenschaftswerts der Batterieelektrodenplatte, der eine Bedingung erfüllt, basierend auf der Vorhersage der Änderung der Eigenschaft der Batterieelektrodenplatte; und
Erzeugen der Informationen, derart, dass sie den ausgewählten Eigenschaftswert und den Auslegungswert des Zielprozessfaktors enthalten, der zur Ableitung des Eigenschaftswerts verwendet wird.

## Revendications

1. Système (1) comportant
un dispositif informatique configuré pour :
recevoir, à partir d'un dispositif client, un facteur de processus cible parmi une pluralité de facteurs de processus associés à la fabrication d'une plaque d'électrode de batterie ;
prédire, via un modèle d'apprentissage automatique, un changement d'une caractéristique de la plaque d'électrode de batterie sur la base d'un changement d'une valeur de conception du facteur de processus cible ;
générer des informations pour sélectionner le facteur de processus cible sur la base de la prédiction du changement de la caractéristique de la plaque d'électrode de batterie ; et
transmettre les informations au dispositif client pour la fabrication de la plaque d'électrode de batterie ;
**caractérisé en ce que**, sur la base de la détermination que la pluralité de facteurs de processus comprend des fractions d'une pluralité de matériaux actifs et que le facteur de processus cible est une fraction d'au moins un matériau actif de la pluralité de matériaux actifs, le dispositif informatique est en outre configuré pour ajuster automatiquement les fractions de la pluralité de matériaux actifs pour rendre une somme des fractions de la pluralité de matériaux actifs égale à 100 en réponse au changement de la valeur de conception du facteur de processus cible.

2. Système (1) selon la revendication 1, dans lequel le modèle d'apprentissage automatique est configuré pour produire une information caractéristique de la plaque d'électrode de batterie sur la base de valeurs de conception d'entrée correspondant à la pluralité de facteurs de processus.

3. Système (1) selon la revendication 2, dans lequel le dispositif informatique est en outre configuré pour :
obtenir une tortuosité de la plaque d'électrode de batterie sur la base du modèle d'apprentissage automatique ; et
calculer une résistance ionique sur la base de la tortuosité.

4. Système (1) selon la revendication 2 ou 3, dans lequel le dispositif informatique est en outre configuré pour définir automatiquement les valeurs de conception d'entrée correspondant à la pluralité de facteurs de processus autres que le facteur de processus cible en tant que valeurs de conception utilisées dans une prédiction précédente du modèle d'apprentissage automatique.

5. Système (1) selon l'une quelconque des revendications 2 à 4, dans lequel le dispositif informatique est en outre configuré pour recevoir les valeurs de conception d'entrée correspondant à la pluralité de facteurs de processus autres que le facteur de processus cible du dispositif client.

6. Système (1) selon l'une quelconque des revendications précédentes, dans lequel le dispositif informatique est en outre configuré pour :
recevoir des informations de plage de conception incluant une plage de changements de valeur de conception et un intervalle de changement du facteur de processus cible en provenance du dispositif client ; et
augmenter ou diminuer la valeur de conception du facteur de processus cible sur la base des informations de plage de conception.

7. Système (1) selon l'une quelconque des revendications précédentes, dans lequel le dispositif informatique est en outre configuré pour :
sélectionner une valeur caractéristique de la plaque d'électrode de batterie qui remplit une condition sur la base de la prédiction du changement de la caractéristique de la plaque d'électrode de batterie ; et
générer les informations pour comprendre la valeur caractéristique sélectionnée et la valeur de conception du facteur de processus cible utilisé pour dériver la valeur caractéristique.

8. Système (1) selon la revendication 7, dans lequel le dispositif informatique est en outre configuré pour :
recevoir une valeur caractéristique cible en provenance du dispositif client ;
sélectionner au moins une deuxième valeur caractéristique sur la base de la prédiction du changement de la caractéristique de la plaque d'électrode de batterie sur la base de la deuxième valeur caractéristique présentant une différence avec la valeur caractéristique cible qui remplit un critère ; et
générer les informations pour comprendre l'au moins une deuxième valeur caractéristique sélectionnée et la valeur de conception du facteur de processus cible utilisée pour dériver au moins une deuxième valeur caractéristique.

9. Système (1) selon la revendication 8, dans lequel les informations caractéristiques comprennent une résistance ionique de la plaque d'électrode de batterie, et le dispositif informatique est en outre configuré pour :
sélectionner au moins une résistance ionique parmi une pluralité de résistances ioniques obtenues sur la base de la prédiction du changement de la caractéristique de la plaque d'électrode de batterie, dans lequel l'au moins une résistance ionique présente la plus petite différence par rapport à une résistance ionique cible reçue en provenance du dispositif client ; et
générer les informations pour comprendre l'au moins une résistance ionique sélectionnée et la valeur de conception du facteur de processus cible utilisé pour dériver l'au moins une résistance ionique sélectionnée.

10. Procédé comportant :
la réception, à partir d'un dispositif client, d'un facteur de processus cible parmi une pluralité de facteurs de processus associés à la fabrication d'une plaque d'électrode de batterie ;
la prédiction, via un modèle d'apprentissage automatique, d'un changement d'une caractéristique de la plaque d'électrode de batterie sur la base d'un changement d'une valeur de conception du facteur de processus cible ;
la génération d'informations pour sélectionner le facteur de processus cible sur la base de la prédiction du changement de la caractéristique de la plaque d'électrode de batterie ; et
la transmission des informations au dispositif client pour la fabrication de la plaque d'électrode de batterie ;
**caractérisé en ce que**, sur la base de la détermination que la pluralité de facteurs de processus comprend des fractions d'une pluralité de matériaux actifs et que le facteur de processus cible est une fraction d'au moins un matériau actif de la pluralité de matériaux actifs, le dispositif informatique est en outre configuré pour ajuster automatiquement les fractions de la pluralité de matériaux actifs pour rendre une somme des fractions de la pluralité de matériaux actifs égale à 100 en réponse au changement de la valeur de conception du facteur de processus cible.

11. Procédé selon la revendication 10, comportant en outre la production d'une information caractéristique de la plaque d'électrode de batterie sur la base de valeurs de conception d'entrée correspondant à la pluralité de facteurs de processus.

12. Procédé selon la revendication 11, comportant en outre :
l'obtention d'une tortuosité de la plaque d'électrode de batterie sur la base du modèle d'apprentissage automatique ; et
le calcul d'une résistance ionique sur la base de la tortuosité.

13. Procédé selon l'une quelconque des revendications 10 à 12, dans lequel les informations comprennent des valeurs de conception pour la pluralité de facteurs de processus pour la fabrication de la plaque d'électrode de batterie, et la pluralité de facteurs de processus comprend un type de matériau actif, une fraction et des propriétés physiques du matériau actif, la teneur en liant, la teneur en matériau conducteur, le niveau de charge, la densité du mélange ou les conditions de procédé.

14. Procédé selon l'une quelconque des revendications 10 à 13, comportant en outre la construction du modèle de prédiction, dans lequel la construction du modèle de prédiction comporte :
la réalisation d'un dispositif expérimental, DOE, sur la base de données expérimentales pour un processus de fabrication de la plaque d'électrode de batterie pour générer un tableau de conception de processus (341) comprenant des valeurs de conception de facteurs de processus pour une pluralité de conditions de conception de processus différentes ;
la réalisation d'une simulation sur la base d'un procédé des éléments discrets sur la base du tableau de conception de processus (341) pour obtenir des données de tortuosité de la plaque d'électrode de batterie ; et
la construction du modèle de prédiction à l'aide du tableau de conception de processus (341) et des données de tortuosité en tant que données d'apprentissage.

15. Procédé selon l'une quelconque des revendications 10 à 14, dans lequel la génération des informations comporte :
la sélection d'une valeur caractéristique de la plaque d'électrode de batterie qui remplit une condition sur la base de la prédiction du changement de la caractéristique de la plaque d'électrode de batterie ; et
la génération des informations pour comprendre la valeur caractéristique sélectionnée et la valeur de conception du facteur de processus cible utilisé pour dériver la valeur caractéristique.
